# DEMANDE DE BREVET EUROPEEN

(11) **EP 1 482 205 A2**
(43) Date de publication de la demande: **01.12.2004**
(21) Numéro de dépôt: 04300279.9
(22) Date de dépôt: 13.05.2004
(51) Int. Cl.: F16F 1/373

(54) **Dispositif amortisseur de vibrations**

(30) Priorité: 28.05.2003 FR 0306522
(71) Demandeur: Peugeot Citroen Automobiles, 78140 Velizy-Villacoublay (FR)
(72) Inventeur: Bourbon, Francis, 92100 Boulogne Billancourt (FR); Gaully, Bruno, 92300 Levallois Perret (FR); Hey, Lilian, 95450 Seraincourt (FR)
(74) Mandataire: De Cuenca, Emmanuel Jaime

(57) **Abrégé**

L'invention concerne un dispositif amortisseur de vibrations (1), comprenant un corps réalisé en une seule pièce et en matériau élastomère sensiblement cylindrique percé en son centre d'un trou débouchant (14) et présentant à chacune de ses extrémités une lèvre annulaire dite respectivement « inférieure » (12) et « supérieure » (11) présentant chacune une partie recourbée vers l'intérieur du corps en regard l'une de l'autre.

Selon l'invention, il comprend une troisième lèvre annulaire (13) dite « intermédiaire » à section transversale parallèlogramme, les trois lèvres (11,12,13) sont adaptées pour entrer en saturation lorsqu'une pression supérieure à 10 N est exercée sur chaque extrémité du corps et simultanément une pression supérieure à 50 N est exercée latéralement sur chaque lèvre et le trou débouchant (14) a une section transversale rectangulaire au niveau de chaque extrémité (141) et présente une forme en creux (142) entre les deux extrémités.

## Description

La présente invention concerne un dispositif amortisseur de vibrations, comprenant un corps réalisé en une seule pièce et en matériau élastomère sensiblement cylindrique percé en son centre d'un trou débouchant et présentant à chacune de ses extrémités une lèvre annulaire dite respectivement « inférieure » et « supérieure » présentant chacune une partie recourbée vers l'intérieur du corps en regard l'une de l'autre.

Elle concerne plus particulièrement un dispositif de ce type utilisé dans les commandes de boite de vitesses manuelle et automatique d'un véhicule automobile, en particulier utilisé sur l'interface de liaison avec la boite de vitesses afin de filtrer les vibrations émises depuis le groupe moto-propulseur vers le levier de vitesses.

Il existe actuellement des dispositifs mécaniques de type filtration sur la gaine de commande et câble qui sont implantés dans les commandes de vitesses qui relient directement le levier de vitesses implanté dans l'habitacle aux éléments mécaniques de la boite de vitesse.

Ces éléments permettent de trouver un bon compromis entre la souplesse requise pour filtrer les vibrations sus-mentionnées et la rigidité requise pour transmettre le mouvement de passage et/ou de sélection des rapports de vitesse. Il s'avère que la mise au point de ces fonctions est difficile à réaliser.

En outre, les filtrations actuelles ne sont pas optimales car les masses suspendues aux filtrations ne sont pas suffisamment grandes pour obtenir la formule suivante : Frés=1/2π* K/M, K étant la raideur et M la masse suspendue.

Le but de l'invention est alors de pallier à cet inconvénient et de proposer un dispositif amortisseur de vibrations qui permette de filtrer au mieux les excitations mécaniques provenant du groupe moto-propulseur au plus près de celui-ci.

Un autre but de l'invention est de proposer un dispositif amortisseurs de vibrations qui permette de filtrer les vibrations au niveau de la platine de boite de vitesses.

Pour ce faire, l'invention a pour objet un dispositif amortisseur de vibrations, comprenant un corps réalisé en une seule pièce et en matériau élastomère sensiblement cylindrique percé en son centre d'un trou débouchant et présentant à chacune de ses extrémités une lèvre annulaire dite respectivement « inférieure » et « supérieure » présentant chacune une partie recourbée vers l'intérieur du corps en regard l'une de l'autre caractérisé en ce qu'il comprend une troisième lèvre annulaire dite « intermédiaire » à section transversale longitudinale parallélogramme, en ce que les trois lèvres sont adaptées pour entrer en saturation lorsqu'une pression supérieure à 10 N est exercée sur chaque extrémité du corps et simultanément une pression supérieure à 50 N est exercée latéralement sur chaque lèvre et en ce que le trou débouchant a une section transversale longitudinale rectangulaire au niveau de chaque extrémité et présente une forme en creux entre les deux extrémités.

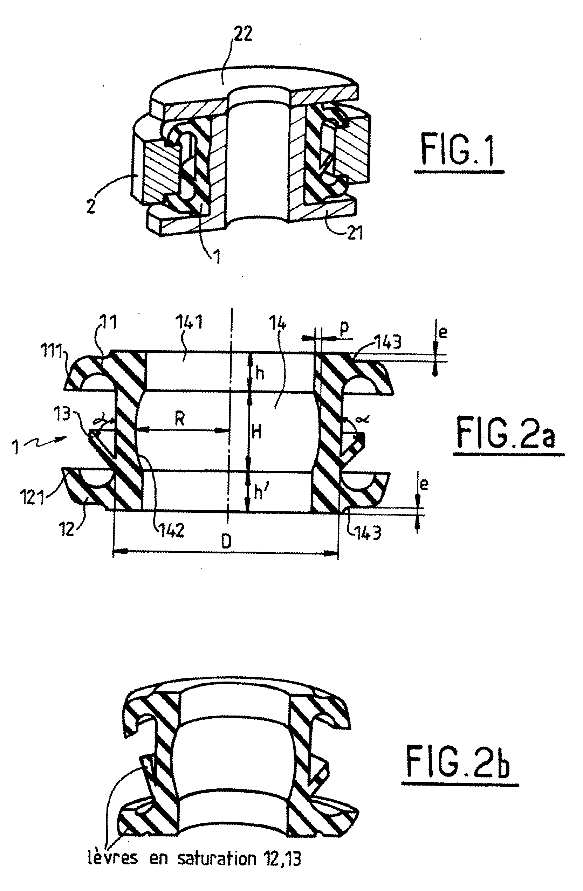

Par « saturation », il faut comprendre ici et dans le cadre de l'invention, que au moins une partie de chaque partie recourbée des lèvres « supérieure » et « inférieure » s'incurve vers l'extérieur du corps de telle sorte à former un point d'inflexion (voir figure 2a) et la lèvre « intermédiaire » vient s'aplatir contre le corps.

La forme du dispositif de vibrations ainsi proposée par l'invention permet de filtrer au mieux les vibrations au niveau de la platine, sans disposer de pièce supplémentaire au niveau de la platine ni rajouter de pièces sur la commande interne de la boite.

En effet, tout comme le dispositif implanté selon l'état de l'art, le dispositif selon l'invention est positionné dans un trou de fixation de la platine et reçoit une entretoise épaulée à l'intérieur de laquelle une vis vient se positionner. Cette vis sert à fixer l'ensemble constitué de la platine, de la gaine du câble et de la masse d'inertie sur le carter moteur.

Ainsi, lorsque le levier de vitesses est au point mort et le moteur du véhicule en état de marche, la raideur intrinsèque du dispositif selon l'invention permet à l'ensemble ainsi constitué avec la platine d'avoir une raideur dynamique qui conduit à n'avoir aucun mode vibratoire du moteur au dessus de 120 Hz avec un niveau d'amplification supérieur à 1, en aval de la platine.

En d'autres termes, pratiquement aucune vibration n'est transmise depuis le groupe moto-propulseur au levier de vitesses implanté dans l'habitacle du véhicule.

Pour améliorer encore la filtration des vibrations il est proposé d'implanter trois dispositifs qui viennent d'être décrits sur la platine, c'est-à-dire à l'intérieur respectivement de chacun des trois trous de fixation de la platine sur le carter moteur. Avantageusement, les lèvres inférieure et supérieure sont identiques.

Avantageusement encore, le dispositif présente un épaulement entre la partie cylindrique du corps et les lèvres inférieure et supérieure.

Selon ce même mode de réalisation préféré, l'angle α formé entre la troisième lèvre annulaire et la paroi du corps cylindrique est compris entre 15 et 60°.

Selon ce même mode de réalisation préféré, la hauteur de l'épaulement est sensiblement égale à la profondeur de la forme en creux.

Selon ce même mode de réalisation de l'invention, la hauteur de la forme en creux est sensiblement égale à la somme des hauteurs des sections transversales rectangulaires au niveau de chaque extrémité.

De préférence, la troisième lèvre annulaire est implantée à la base de la ligne de courbure intérieure de l'une des lèvres extrêmes annulaires inférieure ou extérieure.

De préférence encore, le matériau élastomère est du caoutchouc ou de la matière EPDM.

L'invention concerne également l'utilisation du dispositif amortisseur qui vient d'être décrit pour filtrer les vibrations émises par un groupe moto-propulseur de véhicule automobile vers le levier de vitesses.

Selon cette utilisation, le dispositif amortisseur de vibrations est implanté dans un trou de fixation de la platine de boite de vitesses.

L'invention concerne enfin un véhicule automobile comprenant au moins un dispositif amortisseur de vibrations tel que décrit précédemment.

D'autres caractéristiques et avantages de l'invention ressortiront mieux à la lecture de la description détaillée d'un exemple de réalisation de l'invention faite en référence aux figures 1 à 2 qui représentent respectivement :
- figure 1 : une vue en coupe d'un dispositif amortisseur de vibrations selon l'invention monté sur une platine de commande de boite de vitesses ;
- figure 2a et 2b : une vue en coupe d'un dispositif amortisseur de vibrations selon l'invention respectivement avant et après saturation des lèvres constituant le dispositif.

Le dispositif amortisseur de vibrations selon l'invention 1 comprend tout d'abord un corps en caoutchouc moulé en une seule pièce avec une lèvre annulaire supérieure 11 qui présente une partie recourbée 111 vers l'intérieur du corps en regard d'une partie recourbée 121 d'une lèvre annulaire inférieure 12 identique à la lèvre supérieure 11.

Ce corps 1 présente également une troisième lèvre intermédiaire 13 de section transversale parallèlogramme qui est implantée à la base de de la ligne de courbure (L) intérieure de la lèvre inférieure 12 et recourbée vers la lèvre supérieure 11.

Ce corps 1 de forme générale cylindrique sous la forme usuelle d'un « silent bloc » présente en son centre un trou débouchant 14 de section rectangulaire 141 au niveau des lèvres supérieure et inférieure et de forme en creux 142 dans la partie intermédiaire.

Cette forme en creux 142 a une section circulaire de rayon de courbure R.

Ce corps 1 présente également un épaulement 143 à chacune de ses extrémités qui permet d'encaisser les efforts de serrage dans la platine 2 de boite de vitesses.

La figure 1 montre le dispositif selon l'invention monté dans la platine 2 et entre une entretoise épaulée 21 et une rondelle 22 qui assure la saturation des lèvres inférieure et supérieure.

Comme il l'a déjà été dit précédemment, par « saturation », il faut comprendre ici et dans le cadre de l'invention, que les excitations vibratoires du groupe moto-propulseur du véhicule engendrent la déformation représentée sur la figure 2b, c'est à dire l'aplatissement de la lèvre inférieure 12 contre la paroi inférieure 21 a de l'entretoise 21 et le passage des vitesses engendre celui de la lèvre intermédiaire contre la paroi du corps.

Lors de ce phénomène de saturation, les lèvres inférieure et supérieure débattent respectivement dans leur jeu, c'est-à-dire dans l'épaisseure de chaque épaulement.

Des essais ont pu être réalisé et ont montré que ce phénomène de saturation avait lieu lorsque l'effort appliqué au serrage était tel que la pression exercée sur chaque extrémité du corps 1 était de l'ordre de 10 N et que la pression exercée sur la lèvre intermédiaire 13 était de l'ordre de 50 N.

Dans l'exemple qui vient d'être décrit, la saturation est optimale et la rigidité souhaitée est atteinte.

Dans cet exemple, le rapport entre le rayon de courbure R de la couronne annulaire de la forme en creux et le diamètre D de la partie cylindrique du corps 1 est sensiblement égal à 0.58.

L'angle α formé entre la troisième lèvre annulaire 13 et la partie cylindrique du corps et de l'ordre de 45°.

La hauteur H de la forme en creux est sensiblement égale à la somme des hauteurs h et h' respectivement des sections circulai res du trou débouchant 141.

L'épaisseur de l'épaulement est égale à la profondeur p de la forme en creux.

Avec une telle forme, le dispositif amortisseur de vibrations permet d'obtenir un bon découplage vibratoire de la commande de vitesses tout en garantissant une sensation de qualité au niveau du pommeau de vitesses pour le passage des vitesses (rigidité).

Il est à noter que le dispositif selon l'invention 1 présente une forme identique avant et après montage dans l'ouverture de la platine de boite de vitesses avec un léger écrasement.

Il va de soi que différentes améliorations peuvent être apportées sans pour autant sortir du cadre de l'invention.

Ainsi, la forme en creux peut avoir un profil différent, l'angle α peut avoir une valeur différente en fonction de l'application qui est prévue et en particulier en fonction de la platine de boite de vitesses choisie.

## Revendications

1. Dispositif amortisseur de vibrations (1), comprenant un corps réalisé en une seule pièce et en matériau élastomère sensiblement cylindrique percé en son centre d'un trou débouchant (14) et présentant à chacune de ses extrémités une lèvre annulaire dite respectivement « inférieure » (12) et « supérieure » (11) présentant chacune une partie recourbée vers l'intérieur du corps en regard l'une de l'autre **caractérisé en ce qu'**il comprend une troisième lèvre annulaire (13) dite « intermédiaire » à section transversale parallélogramme, **en ce que** les trois lèvres (11,12,13) sont adaptées pour entrer en saturation lorsqu'une pression supérieure à 10 N est exercée sur chaque extrémité du corps et simultanément une pression supérieure à 50 N est exercée latéralement sur chaque lèvre et **en ce que** le trou débouchant (14) a une section transversale rectangulaire au niveau de chaque extrémité et présente une forme en creux entre les deux extrémités.

2. Dispositif amortisseur selon la revendication 1, **caractérisé en ce que** les lèvres inférieure (12) et supérieure (11) sont identiques.

3. Dispositif amortisseur selon la revendication 1 ou 2, **caractérisé en ce qu'**il présente un épaulement (143) entre la partie cylindrique du corps et les lèvres inférieure et supérieure.

4. Dispositif amortisseur selon l'une quelconque des revendications 1 à 3, **caractérisé en ce que** l'angle α formé entre la troisième lèvre annulaire et la paroi du corps cylindrique est compris entre 15 et 60.°.

5. Dispositif amortisseur selon la revendication 4, **caractérisé en ce que** la hauteur de l'épaulement (e) est sensiblement égale à la profondeur (p) de la forme en creux.

6. Dispositif amortisseur selon l'une quelconque des revendications précédentes, **caractérisé en ce que** la hauteur de la forme en creux (H) est sensiblement égale à la somme des hauteurs (h,h') des sections transversales rectangulaires au niveau de chaque extrémité (141).

7. Dispositif amortisseur selon l'une quelconque des revendications précédentes, **caractérisé en ce que** la troisième lèvre annulaire (13) est implantée à la base de la ligne de courbure intérieure de l'une des lèvres extrêmes annulaires inférieure ou extérieure.

8. Dispositif amortisseur selon l'une quelconque des revendications précédentes, **caractérisé en ce que** le matériau élastomère est du caoutchouc.

9. Utilisation du dispositif amortisseur selon l'une quelconque des revendications 1 à 9 pour filtrer les vibrations émises par un groupe moto-propulseur de véhicule automobile vers le levier de vitesses.

10. Utilisation selon la revendication 9 selon laquelle le dispositif amortisseur de vibrations est implanté dans une ouverture de la platine de boite de vitesses.

11. Véhicule automobile comprenant au moins un dispositif amortisseur de vibrations selon l'une quelconque des revendications 1 à 8.
